# EUROPÄISCHE PATENTSCHRIFT

(11) **EP 1 025 046 B1**
(45) Veröffentlichungstag und Bekanntmachung des Hinweises auf die Patenterteilung: **29.09.2010**
(21) Anmeldenummer: 99936586.9
(22) Anmeldetag: 22.07.1999
(51) Int. Cl.: C02F 1/32

(54) **EINRICHTUNG ZUM ENTKEIMEN VON WASSER, WELCHES EINE SANITÄREINRICHTUNG DURCHSTRÖMT**
DEVICE FOR DISINFECTING WATER FLOWING THROUGH A SANITARY SYSTEM
DISPOSITIF DE DEGERMAGE DE L'EAU TRAVERSANT UNE INSTALLATION SANITAIRE

(30) Priorität: 21.08.1998 DE 19838006
(43) Veröffentlichungstag der Anmeldung: 09.08.2000
(73) Patentinhaber: HANSA METALLWERKE AG, 70567 Stuttgart (DE)
(72) Erfinder: GATTER, Raimond, CH-8730 Uznach (CH); KUNKEL, Horst, D-70499 Stuttgart (DE); REICH, Erwin, D-70569 Stuttgart (DE)
(74) Vertreter: Ostertag, Ulrich
(86) Internationale Anmeldenummer: PCT/EP1999/005228
(87) Internationale Veröffentlichungsnummer: WO 2000/010923

(56) Entgegenhaltungen:
- EP-A- 0 508 338
- WO-A-95/19188
- WO-A-96/22944
- DE-A- 3 924 349
- DE-U- 29 614 998
- FR-A- 1 295 774
- GB-A- 1 159 306
- PATENT ABSTRACTS OF JAPAN vol. 1996, no. 07, 31. Juli 1996 (1996-07-31) -& JP 08 066677 A (HONDA HAJIME), 12. März 1996 (1996-03-12)

## Beschreibung

Die Erfindung betrifft eine Einrichtung zum Entkeimen von Wasser, welches eine Sanitäreinrichtung durchströmt, nach dem Oberbegrift des Anspruchs 1.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher ein erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten.

Derartige Einrichtungen bestrahlen somit das durch den Durchströmungsraum fließende Wasser, wobei dieses entkeimt wird. Die Effizienz einer solchen Einrichtung wird außer durch die Betriebsparameter der Lampe auch davon beeinflußt, ob tatsächlich der gesamte Durchströmungsraum von Wasser durchflossen wird. Etwaige auftretende Totvolumina, in denen sich Luft oder andere Gase sammeln, innerhalb des Durchströmungsraums führen zur einer nicht optimalen Effizienz der UV-Lampe, da dann nicht der gesamte der Bestrahlung zugängliche Durchströmungsraum zur Entkeimung zur Verfügung steht. Soll bei Tolerierung derartiger Totvolumina dennoch eine ausreichende Entkeimungswirkung erzielt werden, ist es daher erforderlich, die Lampenleistüng entsprechend anzuheben. Dies ist einerseits teuer und kann andererseits zu unerwünschten Nebeneffekten wie einer Erhöhung der Temperatur des Entnahmewassers und/oder der Sanitäreinrichtung führen.

Einrichtungen der eingangs genannten Art sind beispielsweise in der DE-A-39 24 349 und der GB-A-1 159 306 beschrieben. Mit dem oben geschilderten Problem der Totvolumina beschäftigen sich diese Druckschriften jedoch nicht.

Es ist daher die Aufgabe der vorliegenden Erfindung, eine Einrichtung der eingangs genannten Art derart weiterzubilden, daß die Entkeimungseffizienz der UV-Lampe erhöht wird.

Diese Aufgabe wird durch die im Anspruch 1 angegebene Enfindung gelöst.

Eine derartige Entlüftungseinrichtung beseitigt die oben beschriebenen Totvolumina und erhöht dadurch die Entkeimungseffizienz der UV-Lampe und somit der gesamten Einrichtung. Dadurch, daß die Entfernung der sich in den Totvolumina unerwünscht sammelnden Luft oder des Gases durch den Auslaß erfolgt, ist es nicht notwendig, spezielle Entlüftungsbohrungen im Gehäuse der Sanitäreinrichtung vorzusehen, bei denen zusätzlich verhindert werden müßte, daß Wasser aus der Sanitäreinrichtung austritt.

Bei der Erfindung umfaßt die Entlüftungseinrichtung eine Einengung des Strömungsquerschnitts im Bereich des stromabwärts liegenden Endes des Durchströmungsraumes. Eine derartige Einengung führt zu einer Erhöhung der Strömungsgeschwindigkeit des bei der Entnahme durch den Bereich der. Einengung fließenden Wassers. Luft- oder Gasblasen, die sich im stromaufwärtigen Einzugsbereich dieser erhöhten Strömungsgeschwindigkeit befinden, werden aus dem Durchströmungsraum quasi abgesaugt und störende Totvolumina dadurch beseitigt.

Bei der Erfindung ist der Durchströmungsraum so ausgebildet, daß sein am höchsten gelegener Bereich am stromabseitigen Ende des Durchströmungsraums liegt. Eine derartige Ausbildung führt dazu, daß sich im Durchströmungsraum bildende Luft- oder Gasblasen einerseits auf Grund der Strömungswirkung und andererseits auf Grund ihres Auftriebs zum stromabwärts gelegenen Ende des Durchströmungsraums geführt werden, wo sie dann durch den Auslaß entfernt werden können.

Vorteilhaft ist die Einengung des Strömungsquerschnitts durch eine Ablaufbohrung in einer Trennwand zwischen dem Durchströmungsraum und einem Auslaßraum gebildet. Auf diese Weise läßt sich die Einengung einfach und kostengünstig realisieren. Die oben beschriebene Absaugcharakteristik dieser Einengung kann durch den Rohrdurchmesser an die jeweils herrschenden Bedingungen angepaßt werden.

Vorteilhaft ist dabei die Längsachse des Durchströmungeraums gegenüber der Horizontalen geneigt. Damit läßt sich die oben beschriebene Ausbildung des Durchströmungsraums erzielen, ohne zusätzlichen Aufwand bei der Herstellung seiner Gestalt betreiben zu müssen.

Ein Ausführungsbeispiel der Erfindung wird nachfolgend anhand der Zeichnung näher erläutert; es zeigen:
- Figur 1: einen unterbrochenen Schnitt durch einen Wannenauslauf, der mit einer Einrichtung zur Entkeimung von durchlaufendem Wasser versehen ist;
- Figur 2: einen Schnitt durch Figur 1 gemäß Linie II-II in etwas vergrößertem Maßstab; und
- Figur 3: eine Seitenansicht des gesamten Wannenauslaufs in Montagestellung.

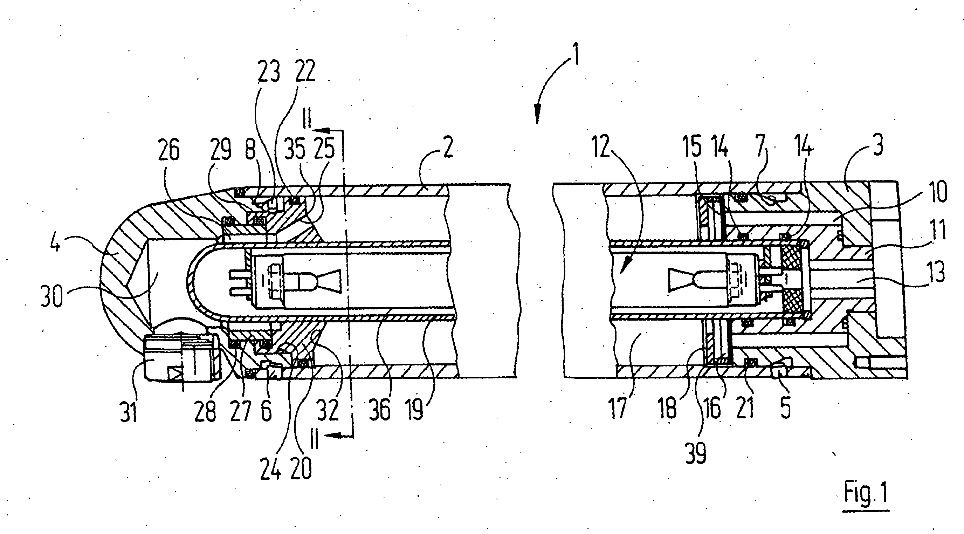

Der insgesamt mit dem Bezugszeichen 1 bezeichnete Wannenauslauf umfaßt einen im wesentlichen hohlzylindrischen Gehäusemantel 2, der an einem in der Figur 1 rechten, einer Gebäudewand benachbarten Ende durch einen Montagesockel 3 und an seinem gegenüberliegenden Ende durch einen Auslaufkopf 4 verschlossen ist. Montagesockel 3 und Auslaufkopf 4 sind jeweils durch eine den Gehäusemantel 2 durchdringende Madenschraube 5 bzw. 6 an dem Gehäusemantel 2 montiert, welche in eine Umfangsnut 7 bzw. 8 an dem Montagesockel 3 bzw. dem Auslaufkopf 4 eingreift.

Das durch den Wannenauslauf 1 zu entnehmende Wasser wird über einen in der Zeichnung nicht dargestellten Wasserzulaufstutzen zunächst in einen ringförmigen Einlaß 10 des Wannenauslaufs 1, der sich innerhalb des Montagesockels 3 befindet, eingeleitet. Radial innen ist der Einlaß 10 von einem Aufnahmesockel 11 zur Halterung einer insgesamt mit 12 bezeichneten UV-Lampe begrenzt. Neben der Aufnahme für die UV-Lampe 12 weist der Aufnahmesockel 11 eine Durchführung 13 für die Aufnahme elektrischer Anschlußleitungen (nicht dargestellt) der UV-Lampe 12 auf. Das dem Aufnahmesockel 11 zugewandte Ende der UV-Lampe 12 ist gegen einströmendes Wasser mittels zweier Dichtringe 14, die sich in entsprechenden inneren Umfangsnuten des Aufnahmesockels 11 befinden, abgedichtet.

Vom Einlaß 10 gelangt das Wasser durch ein Sieb 15, das über einen Winkelring 39 in den Gehäusemantel 2 eingepaßt ist, in einen Vorraum 16. Beim Übergang von diesem Vorraum 16 in einen Durchströmungsraum 17 muß das Wasser den erhöhten Strömungswiderstand einer ringförmigen Prallplatte 18 überwinden, die die Strömungsquerschnittsfläche so verkleinert, daß sie auf einen radial innen liegenden Teilbereich der ursprünglichen Strömungsquerschnittsfläche begrenzt ist. Der Durchströmungsraum 17 hat im wesentlichen die Form eines Hohlzylinders, dessen äußere Mantelfläche vom Gehäusemantel 2 und dessen innere Mantelfläche von einem Schutzrohr 19 gebildet wird. Das Schutzrohr 19 ist an seinem stromaufwärts liegenden Ende vom Aufnahmesockel 11 verschlossen und ist an seinem stromabwärts liegenden Ende einstückig geschlossen. Es besteht aus UV-durchlässigem Quarzglas. An seiner stromabwärts liegenden Stirnseite ist der Durchströmungsraum 17 von einem Durchgangseinsatz 20 begrenzt. Stromaufwärts gegenüber dem Montagesockel 3 und stromabwärts gegenüber dem Durchgangseinsatz 20 wird der Durchströmungsraum 17 durch Dichtringe 21 bzw. 22, die in entsprechenden Umfangsnuten des Montagesockels 3 bzw. des Durchgangseinsatzes 20 liegen, nach außen abgedichtet.

Der Durchgangseinsatz 20 ist durch eine den Auslaufkopf 4 durchdringende Madenschraube 23 an den Auslaufkopf 4 festgelegt, welche in eine Umfangsnut 24 an den Durchgangseinsatz 20 eingreift.

In eine den Durchströmungsraum 17 begrenzende Stirnfläche 32 des Durchgangseinsatzes 20 mündet eine in Fig. 1 oberhalb der UV-Lampe 12 liegende Durchgangsbohrung 25, die den Durchströmungsraum 17 mit einem ringförmigen Teilraum 26 verbindet. Die radiale Außenfläche des Teilraumes 26 wird von einem für UV-Licht durchlässigen Ring 27 gebildet, um den zwei Dichtringe 28 bzw. 29 angeordnet sind, die in entsprechenden Umfangsnuten des Durchgangseinsatzes 20 bzw. des Auslaufkopfes 4 liegen und den Teilraum 26 nach außen abdichten.

Vom Teilraum 26 strömt das Wasser schließlich in einen Auslaufraum 30, der vom stromabseitigen Ende des Schutzrohrs 19 und dem Auslaufkopf 4 begrenzt ist und mit einem als Auslaß arbeitenden Luftsprudler 31 kommuniziert.

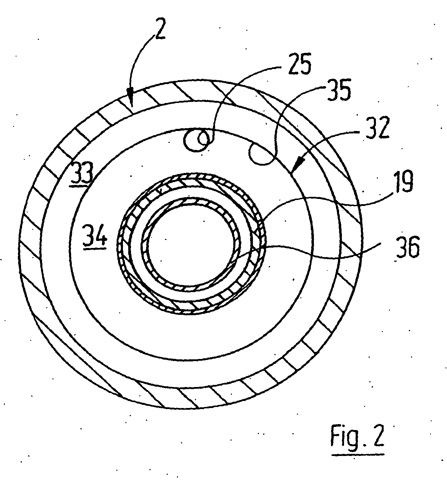

Der Schnittdarstellung der Figur 2 ist zu entnehmen, wie die Durchgangsbohrung 25 auf der den Durchströmungsraum 17 stromabwärts begrenzenden Stirnfläche 32 des Durchgangseinsatzes 20 positioniert ist. Ein radial außenliegender Flächenbereich 33 der Stirnfläche 32 verläuft senkrecht zur Lampenachse, während ein radial innenliegender Flächenbereich 34 als Konusfläche ausgebildet ist, die so geneigt ist, daß die axiale Abmessung des Durchgangseinsatzes 20 zur UV-Lampe 12 hin zunimmt. Die in Figur 2 obenliegende Kante, die die Durchgangsbohrung 25 mit der Stirnfläche 32 bildet, fällt mit dem Kantenbereich 35, der von den benachbarten Flächenbereichen 33 und 34 ausgebildet wird, zusammen.

Figur 2 zeigt von innen nach außen die folgenden konzentrisch angeordneten Elemente (vgl. auch Fig. 1): einen hohlzylinderförmigen Lampenkörper 36 der UV-Lampe 12, das Schutzrohr 19, die Stirnfläche 32 sowie den Gehäusemantel 2.

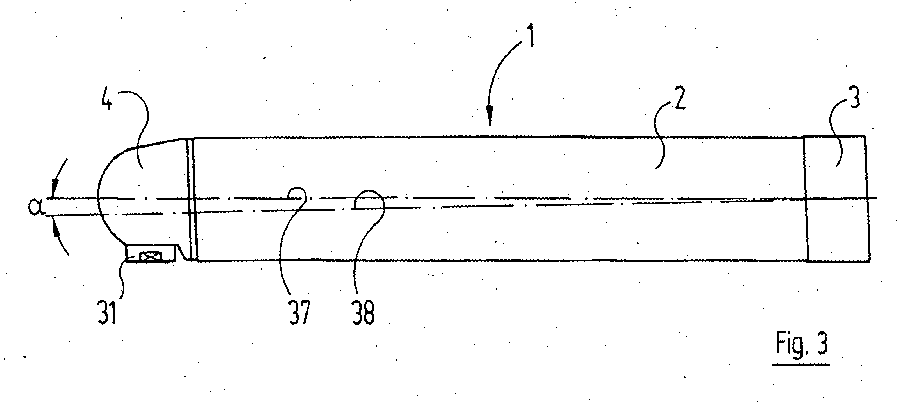

Wie Figur 3 verdeutlicht, ist in der Montagestellung die Mittenachse 37 des Wannenauslaufs 1 gegenüber der Horizontalen 38 so geneigt, daß das stromabwärts liegende Ende des Wannenauslaufs 1 höher liegt, als das stromaufwärts liegende. Der Winkel zwischen der Mittenachse 37 und der Horizontalen 38 ist mit a bezeichnet.

Die Funktion der Entlüftungsei:nrichtüng der beschriebenen Einrichtung zum Entkeimen von Wasser ist wie folgt:
Wird ein in der Zeichnung nicht dargestelltes Ventil geöffnet, so strömt Wasser über den Einlaß 10, vorbei am Sieb 15 und der Prallplatte 18 in den Durchströmungsraum 17. Vom Durchströmungsraum 17 strömt das Wasser über die Durchgangsbohrung 25 und den Teilraum 26 in den mit dem Luftsprudler 31 kommunizierenden Auslaufraum 30, wo es entnommen wird. Luftblasen, die sich während der Entnahme im Durchströmungsraum 17 befinden, gelangen aufgrund der Auftriebswirkung, gegebenenfalls mit Unterstützung durch die Mitnahmekraft des Wassers, in den am höchsten gelegenen Bereich des Durchströmungsraums 17. Wegen der in Zusammenhang mit Figur 3 beschriebenen Neigung des Wannenauslaufs 1 ist dies der Bereich in der Nähe der Durchgangsbohrung 25. Die sich dort als Folge der Auftriebswirkung und der Strömung des entnommenen Wassers sammelnde Luft wird aus diesem Bereich aufgrund der erhöhten Strömungsgeschwindigkeit innerhalb der Durchgangsbohrung 25 durch diese mitgerissen und durch den Auslaufkopf 4 und den Luftsprudler 31 hindurch entfernt. Der Durchströmungsraum 17 wird somit während der Wasserentnahme ständig entlüftet.

## Patentansprüche

1. Einrichtung zum Entkeimen von Wasser, welches eine Sanitäreinrichtung durchströmt, mit
a) einem Gehäuse (2, 3, 4), welches einen Einlaß (10) und einen Auslaß (31) für das Wasser aufweist;
b) einer UV-Lampe (12), die innerhalb des Gehäuses (2, 3, 4) angeordnet ist und deren Strahlung auf das durchströmende Wasser gerichtet ist;
c) einem im Gehäuse (2, 3, 4) angeordneten, die UV-Lampe (12) umgebenden Durchströmungsraum (17) für das Wasser;
**dadurch gekennzeichnet, daß**
d) eine Entlüftungseinrichtung (25) vorgesehen ist, welche die sich im Durchströmungsraum (17) sammelnde Luft oder das sich dort sammelnde Gas durch den Auslaß (31) hindurch entfernt.
e) die Entlüftungseinrichtung (25) eine Einengung des Strömungsquerschnitts im Bereich des stromabwärts liegenden Endes des Durchströmungsraums (17) umfaßt;
f) der Durchströmungsraum (17) soausgebildet ist, daß sein am höchsten gelegener Bereich am stromabseitigen Ende des Durchströmungsraums (17) liegt.

2. Einrichtung nach Anspruch 1, **dadurch gekennzeichnet,**
**daß** die Einengung des Strömungsquerschnitts durch eine Ablaufbohrung (25) in einer Trennwand (20) zwischen dem Durchströmungsraum (17) und einem Auslaßraum (30) gebildet ist.

3. Einrichtung nach einem der Ansprüche 1 oder 2, **dadurch gekennzeichnet,**
**daß** die Längsachse (37) des Durchströmungsraums (17) gegenüber der Horizontalen (38) geneigt ist.

## Claims

1. A device for sterilizing water flowing through a sanitary appliance, having
a) a housing (2, 3, 4), which comprises an inlet (10) and an outlet (31) for the water;
b) a UV lamp (12), which is disposed inside the housing (2, 3, 4) and the radiation of which is directed towards the water flowing through;
c) a throughflow chamber (17) for the water which is disposed in the housing (2, 3, 4) and surrounds the UV lamp (12);
**characterized in that**
d) a venting device (25) is provided which removes the air or gas, which collects in the throughflow chamber (17), through the outlet (31) ;
e) the venting device (25) comprises a constriction of the flow area in the region of the downstream end of the throughflow chamber (17) ;
f) the throughflow chamber (17) is so designed that its highest region is situated at the downstream end of the throughflow chamber (17).

2. A device according to claim 1, **characterized in that** the constriction of the flow area is formed by a discharge bore (25) in a partition (20) between the throughflow chamber (17) and an outlet chamber (30).

3. A device according to claim 1 or 2, **characterized in that** the longitudinal axis (37) of the throughflow chamber (17) is inclined relative to the horizontal (38).

## Revendications

1. Dispositif de désinfection de l'eau qui s'écoule à travers une installation sanitaire, avec
a) un boîtier (2, 3, 4), qui présente une entrée (10) et une sortie (31) pour l'eau ;
b) une lampe à rayons ultraviolets (12), qui est disposée à l'intérieur du boîtier (2, 3, 4) et dont le rayonnement est dirigé sur l'eau qui s'écoule ;
c) une chambre d'écoulement (17) pour l'eau, disposée dans le boîtier (2, 3, 4) et entourant la lampe à rayons ultraviolets (12) ;
**caractérisé en ce que**
d) il est prévu un dispositif de purge d'air (25), qui évacue par la sortie (31) l'air ou le gaz qui s'accumule dans la chambre d'écoulement (17) ;
e) le dispositif de purge d'air (25) comprend un rétrécissement de la section d'écoulement dans la région de l'extrémité aval de la chambre d'écoulement (17) ;
f) la chambre d'écoulement (17) est conçue de telle sorte que sa région la plus haute se situe à l'extrémité aval de la chambre d'écoulement (17).

2. Dispositif selon la revendication 1, **caractérisé en ce que** le rétrécissement de la section d'écoulement est formé par un perçage d'évacuation (25) dans une cloison séparatrice (20) entre la chambre d'écoulement (17) et une chambre de sortie (30).

3. Dispositif selon la revendication 1 ou 2, **caractérisé en ce que** l'axe longitudinal (37) de la chambre d'écoulement (17) est incliné par rapport à l'horizontale (38).
